# DEMANDE DE BREVET EUROPEEN

(11) **EP 3 112 814 A1**
(43) Date de publication de la demande: **04.01.2017**
(21) Numéro de dépôt: 16177259.5
(22) Date de dépôt: 30.06.2016
(51) Int. Cl.: G01C 23/00

(54) **SYSTEME DE VISUALISATION COMPRENANT DES MOYENS DE SELECTION, DE PARTAGE ET D'AFFICHAGE D'OBJETS GRAPHIQUES DANS DIFFERENTS MODES DE VISUALISATION ET PROCEDE ASSOCIE**

(30) Priorité: 02.07.2015 FR 1501402
(71) Demandeur: Thales, 92400 Courbevoie (FR)
(72) Inventeur: CAZAUX, Patrick, 33187 LE HAILLAN Cedex (FR); RIVAILLON, Laurent, 33187 LE HAILLAN Cedex (FR); LEMOINE, Eric, 33187 LE HAILLAN Cedex (FR)
(74) Mandataire: Bréda, Jean-Marc

(57) **Abrégé**

Le domaine général de l'invention est celui des systèmes de visualisation de cockpit pour aéronef comportant un équipement d'interaction homme-machine (IHM1), un équipement de traitement de données (ETD1) et un dispositif de visualisation (DU1). L'équipement de traitement de données comprend une base de données comportant une pluralité d'objets et des moyens de calcul de différentes fenêtres d'affichage (W1, W2, W3, W4, W5, W6), chaque objet ayant plusieurs formes de représentation graphique dans lesdites fenêtres. Le dispositif de visualisation est agencé pour afficher les fenêtres d'affichage. L'équipement d'interaction homme-machine comporte des moyens de sélection d'un état de représentation graphique d'un objet dans une des fenêtres. Les états de représentation graphique des objets comportent un état « sélectionné ». Lorsque la sélection d'un état de représentation graphique d'un objet est effective, les moyens de calcul de l'équipement de traitement basculent la totalité des différentes représentations graphiques dudit objet dans les différentes fenêtres dans cet état « sélectionné ».

## Description

Le domaine de l'invention est celui des systèmes de visualisation de cockpit pour aéronef. Ces systèmes comprennent plusieurs fenêtres de présentation d'informations qui sont réparties sur plusieurs dispositifs de visualisation disposés notamment sur la planche de bord de l'aéronef. Ces fenêtres peuvent être redondantes lorsque l'équipage comporte un pilote et un copilote.

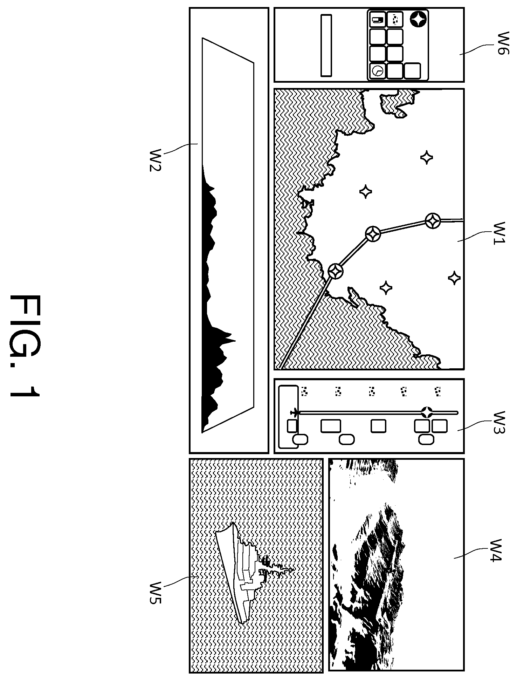

Les informations présentées concernent la gestion de la mission de l'aéronef et plus particulièrement, le pilotage et la navigation. A titre d'exemple, la figure 1 représente différentes fenêtres susceptibles d'être affichées sur les dispositifs de visualisation du système de visualisation. On entend par dispositif de visualisation non seulement les écrans de la planche de bord, mais également les systèmes de superposition sur l'extérieur comme les visualisations dite Tête Haute ou les systèmes de visualisation de casque portés par le pilote.

L'organisation des fenêtres de la figure 1 n'est pas représentative de l'agencement réel dans un cockpit d'aéronef qui peut être différent.

La première fenêtre W1 représente une vue horizontale du terrain survolé. Elle peut contenir des informations aéronautiques comme le plan de vol de l'aéronef avec ses différents points de passage ou « waypoints ».

La seconde fenêtre W2 représente une vue en coupe verticale du terrain survolé. Là encore, cette vue peut contenir diverses informations aéronautiques.

La troisième fenêtre W3 représente une vue temporelle de la mission ou du plan de vol. Elle comporte généralement une ligne des temps ou « timeline » sur laquelle figurent les différentes phases de vol.

La quatrième fenêtre W4 est une vue tridimensionnelle ou 3D du terrain survolé.

La cinquième fenêtre W5 est une vue vidéo provenant de caméras embarquées. Cette vue peut être une image du paysage extérieur, mais également de l'intérieur ou de l'extérieur de l'appareil.

La sixième fenêtre W6 peut être une fenêtre comportant des informations sous forme de textes, d'indications chiffrées ou de différents symboles.

Ces différentes fenêtres affichent un certain nombre d'objets réels ou virtuels propres au monde aéronautique. On citera, à titre d'exemples non limitatifs,
- les objets nécessaires à la navigation comme les aéroports, les systèmes d'aide à la navigation, connus sous l'acronyme « Navaids », les plans de vol, les points de passage ou « waypoints », ...
- les objets propres au terrain comme les obstacles, les points de repère géographiques, ...
- les objets en déplacement comme les autres aéronefs propres au trafic aérien, le trafic maritime,...

Un même objet peut donc être représenté dans différentes vues sous différents aspects. Actuellement, les systèmes de visualisation ne comportent qu'un seul système de désignation. Ainsi, le pilote ne peut désigner un objet particulier que dans une vue unique. Le brevet US 8 723 696 intitulé « Location information generation system, device, and method » présente un système de désignation permettant de désigner une position particulière dans une première représentation du terrain, la désignation de cette position particulière entraînant la désignation de la même position dans une seconde représentation du terrain. Cette solution reste limitée à des représentations cartographiques.

Le système selon l'invention ne présente pas cet inconvénient. Il permet, lorsqu'un objet est désigné dans une fenêtre particulière, de désigner le même objet dans toutes les fenêtres graphiques qui le comportent, quelque soit sa représentation. Plus précisément, l'invention a pour objet un système de visualisation de cockpit pour aéronef comportant au moins un premier équipement d'interaction homme-machine, un premier équipement de traitement de données et au moins un premier dispositif de visualisation,
Le premier équipement de traitement de données comprenant une première base de données comportant une pluralité d'objets et des moyens de calcul de différentes premières fenêtres d'affichage comportant lesdits objets, chaque objet ayant plusieurs formes de présentation, chaque forme de présentation ayant un à plusieurs états de représentation graphique ;
Le premier dispositif de visualisation agencé pour afficher lesdites premières fenêtres d'affichage ;
Le premier équipement d'interaction homme-machine comportant des premiers moyens de sélection d'un état de représentation graphique d'une forme de présentation d'un desdits objets dans une desdites premières fenêtres ;
Caractérisé en ce que, les états de représentation graphique d'un objet comportant un état dit « sélectionné », lorsque la sélection d'un état de représentation graphique d'une forme de présentation d'un desdits objets est effective, les moyens de calcul du premier équipement de traitement identifient ledit objet et basculent la totalité des différentes représentations graphiques dudit objet dans les différentes premières fenêtres dans cet état dit « sélectionné ».

Avantageusement, le système de visualisation comporte un second équipement d'interaction homme-machine, un second équipement de traitement de données, un second dispositif de visualisation et un réseau de transfert de données relié au premier équipement de traitement de données et au second équipement de traitement de données ;
Le second équipement de traitement de données comprenant une seconde base de données comportant ladite pluralité d'objets et des moyens de calcul de différentes secondes fenêtres d'affichage comportant lesdits objets, chaque objet ayant plusieurs forme de présentation, chaque forme de présentation ayant un à plusieurs états de représentation graphique ;
Le second dispositif de visualisation agencé pour afficher lesdites secondes fenêtres d'affichage ;
Le second équipement d'interaction homme-machine comportant des seconds moyens de sélection d'un état de représentation graphique d'une forme de présentation d'un desdits objets dans une desdites secondes fenêtres, les états de représentation graphique d'un objet comportant un état dit « sélectionné », lorsque la sélection d'un état de représentation graphique d'une forme de présentation d'un desdits objets est effective, les moyens de calcul de l'équipement de traitement identifient ledit objet et basculent la totalité des différentes représentations graphiques dudit objet dans les différentes secondes fenêtres dans cet état dit « sélectionné » et au moyen du réseau de transfert de données, basculent la totalité des différentes représentations graphiques dudit objet dans les différentes premières fenêtres dans cet état dit « sélectionné ».

Avantageusement, lorsqu'un objet est identifié, les moyens de calcul de l'équipement de traitement transmettent aux différentes premières fenêtres des informations d'identification et de paramétrage dudit objet.

Avantageusement, lorsque l'objet sélectionné est absent d'une desdites fenêtres, les moyens de calcul de l'équipement de traitement créent l'objet dans ladite fenêtre dans un état dit « sélectionné ».

Avantageusement, les premières ou les secondes fenêtres d'affichage représentent soit une vue horizontale d'un terrain, soit une vue en coupe verticale dudit terrain, soit une échelle des temps comportant des informations sur une mission de l'aéronef, soit une vue tridimensionnelle dudit terrain, soit une image issue d'un capteur d'imagerie, soit une fenêtre d'informations textuelles.

Avantageusement, la pluralité d'objets appartient au domaine de la navigation ou au terrain ou au trafic environnant aérien ou maritime.

L'invention concerne également un procédé de représentation graphique d'un objet dans un système de visualisation de cockpit pour aéronef comportant au moins un premier équipement d'interaction homme-machine, un premier équipement de traitement de données et au moins un premier dispositif de visualisation,
Le premier équipement de traitement de données comprenant une première base de données comportant une pluralité d'objets et des moyens de calcul de différentes premières fenêtres d'affichage comportant lesdits objets, chaque objet ayant plusieurs formes de présentation, chaque forme de présentation ayant un à plusieurs états de représentation graphique ;
Le premier dispositif de visualisation agencé pour afficher lesdites premières fenêtres d'affichage ;
Le premier équipement d'interaction homme-machine comportant des premiers moyens de sélection d'un état de représentation graphique d'une forme de présentation d'un desdits objets dans une desdites premières fenêtres ;
Caractérisé en ce que le procédé de représentation graphique comporte au moins les étapes suivantes :
Sélection d'un état de représentation graphique d'une forme de présentation d'un desdits objets par le premier équipement d'interaction homme-machine dans une desdites premières fenêtres d'affichage ;
Identification dudit objet par les moyens de calcul du premier équipement de traitement ;
Basculement par les moyens de calcul du premier équipement de traitement, de la totalité des différentes représentations graphiques dudit objet dans les différentes premières fenêtres dans un état de représentation graphique dit « sélectionné ».

Avantageusement, le système de visualisation comportant un second équipement d'interaction homme-machine, un second équipement de traitement de données, un second dispositif de visualisation et un réseau de transfert de données relié au premier équipement de traitement de données et au second équipement de traitement de données ;
Le second équipement de traitement de données comprenant une seconde base de données comportant ladite pluralité d'objets et des moyens de calcul de différentes secondes fenêtres d'affichage comportant lesdits objets, chaque objet ayant plusieurs forme de présentation, chaque forme de présentation ayant un à plusieurs états de représentation graphique ;
Le second dispositif de visualisation agencé pour afficher lesdites secondes fenêtres d'affichage ;
Le second équipement d'interaction homme-machine comportant des seconds moyens de sélection d'un état de représentation graphique d'une forme de présentation d'un desdits objets dans une desdites secondes fenêtres,
le procédé de représentation graphique comporte au moins les étapes suivantes :
Sélection d'un état de représentation graphique d'une forme de présentation d'un desdits objets par le second équipement d'interaction homme-machine dans une desdites secondes fenêtres d'affichage ;
Identification dudit objet par les moyens de calcul du second équipement de traitement ;
Basculement par les moyens de calcul du second équipement de traitement, de la totalité des différentes représentations graphiques dudit objet dans les différentes secondes fenêtres dans un état de représentation graphique dit « sélectionné » ;
Transfert au moyen du réseau de transfert de données de l'objet sélectionné du second équipement au premier équipement de traitement de données ;
Basculement par les moyens de calcul du premier équipement de traitement de données, de la totalité des différentes représentations graphiques dudit objet dans les différentes premières fenêtres dans cet état de représentation graphique dit « sélectionné ».

L'invention sera mieux comprise et d'autres avantages apparaîtront à la lecture de la description qui va suivre donnée à titre non limitatif et grâce aux figures annexées parmi lesquelles :
La figure 1 représente les différentes fenêtres graphiques d'un système de visualisation de cockpit selon l'art antérieur ;
La figure 2 représente un premier synoptique d'un système de visualisation de cockpit selon l'invention ;
La figure 3 représente différentes fenêtres d'affichage comportant la représentation d'un objet sélectionné selon l'invention ;
La figure 4 représente un second synoptique d'un système de visualisation de cockpit selon l'invention.

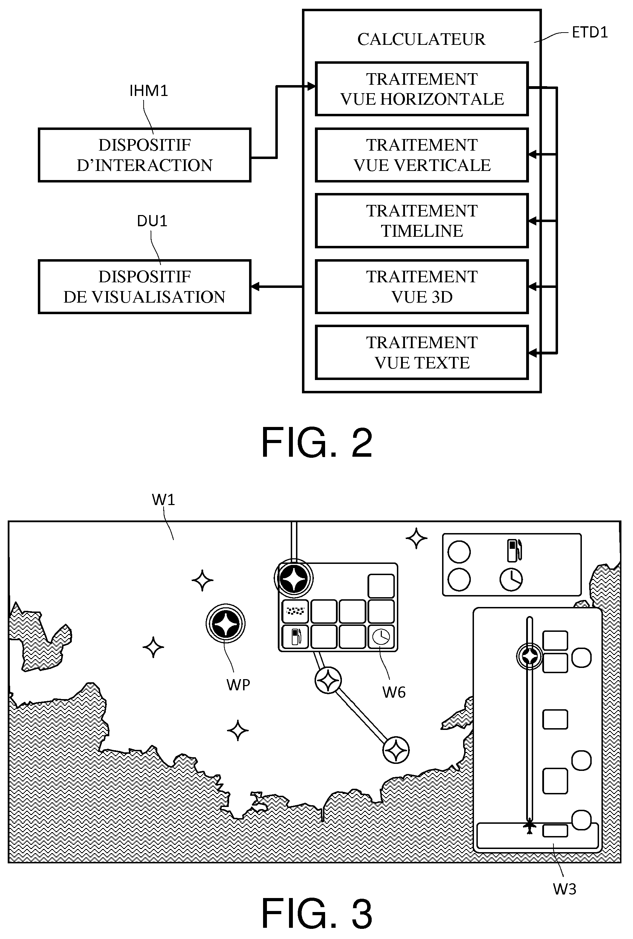

A titre de premier exemple, la figure 2 représente un premier synoptique d'un système de visualisation de cockpit selon l'invention. Il comporte uniquement un premier équipement d'interaction homme-machine IHM1, un premier équipement de traitement de données ETD1 et au moins un premier dispositif de visualisation DU1.

A titre d'exemple, le premier équipement d'interaction homme-machine peut être un ensemble comprenant un dispositif appelé « CCD », acronyme de « Cursor Control Device », l'équivalent de la « souris » informatique, une pavé tactile ou une dalle tactile disposée sur l'écran de visualisation, une commande vocale ou une commande par reconnaissance gestuelle. Ce premier équipement comporte des premiers moyens de sélection d'un état de représentation graphique d'une forme de présentation d'un desdits objets dans une desdites premières fenêtres. Cette sélection peut être obtenue, par exemple, au moyen d'un « click » sur le bouton de commande d'une souris ou par une désignation tactile sur une dalle tactile.

Le premier équipement de traitement de données est un calculateur électronique. Le coeur du calculateur peut être un processeur, un système sur puce connu sous l'acronyme « SOC », signifiant « System On Chip » ou encore un composant « FPGA », acronyme signifiant « Field-Programmable Gate Array ». Le calculateur comprend une première base de données comportant une pluralité d'objets et des composants de calcul de différentes premières fenêtres d'affichage comportant lesdits objets, chaque objet ayant plusieurs formes de présentation, chaque forme de présentation ayant un à plusieurs états de représentation graphique.

Le premier dispositif de visualisation agencé pour afficher les premières fenêtres d'affichage peut être un dispositif de visualisation de planche de bord dit « Tête Basse » , un dispositif dit « Tête Haute » affichant des informations en superposition sur le paysage extérieur, un équipement de visualisation porté par la tête de l'utilisateur ou monté sur un casque, une « tablette », ....Tous ces dispositifs sont connus de l'homme du métier.

Comme dit précédemment, les fenêtres d'affichage peuvent être de différents types. A titre d'exemples non limitatifs, les fenêtres peuvent correspondre à :
- une vue horizontale du terrain survolé ;
- une vue dans un plan de coupe vertical dudit terrain ;
- une vue dite « Timeline » comportant des informations sur le plan de vol de l'aéronef ou sur sa mission ;
- une vue en perspective ou tridimensionnelle du terrain ; Cette vue peut être conforme au paysage effectivement vu par le pilote ou représenter une zone particulière de la mission à venir comme, par exemple, le prochain point de posée ;
- une fenêtre d'informations textuelles concernant le vol ou la navigation aérienne ;
- une image vidéo.

Les tailles des fenêtres ne correspondent pas nécessairement aux tailles des écrans de visualisation. Ainsi, plusieurs fenêtres peuvent être représentées sur un écran unique ou une fenêtre peut s'étendre sur plusieurs écrans.

Comme déjà dit, les objets affichables ou affichés sont de nature diverse. On citera, à titre d'exemples non limitatifs,
- les objets nécessaires à la navigation comme les aéroports, les systèmes d'aide à la navigation, connus sous l'acronyme « Navaids », les plans de vol, les points de passage, ...
- les objets propres au terrain comme les obstacles, les points de repère géographiques, ...
- les objets en déplacement comme les autres aéronefs propres au trafic aérien ou les objets du trafic maritime ou routier.

Chaque objet dispose d'états graphiques propres correspondant à un état de sollicitation particulier. A titre d'exemples, on citera les états suivants : actif, sélectionné, autorisé, en alerte,...Les représentations graphiques peuvent être différentiées en utilisant des couleurs différentes, des formes différentes, des clignotements ou des marquages particuliers. Dans le système selon l'invention, chaque objet comporte un état graphique dédié supplémentaire dit « surligné » ou « external highlight » signifiant que l'objet a été désigné par le premier équipement d'interaction homme-machine.

Lorsqu'un objet est sélectionné dans une des fenêtres, le calculateur émet un événement appelé « Event external object selection » accompagné de l'identifiant de l'objet sélectionné. Lorsqu'une autre fenêtre d'affichage reçoit cet événement, si cette fenêtre comporte le même objet, alors l'objet passe dans l'état graphique « surligné » ou « external highlight ». De la même façon, lorsqu'un objet est désélectionné dans une fenêtre particulière, il passe dans cet état désélectionné dans toutes les fenêtres qui le contiennent.

Par exemple, sur la figure 2, un objet est sélectionné dans la fenêtre correspondant à la vue horizontale. La sélection est représentée par une flèche brisée sur cette figure 2. L'information de sélection est ensuite transmise à toutes les autres fenêtres puis au dispositif de visualisation.

A titre d'exemple de fonctionnement du système de visualisation selon l'invention, la figure 3 représente trois fenêtres graphiques W1, W3 et W6. Ces trois fenêtres sont affichées sur un même écran de visualisation. La fenêtre W1 représente une vue horizontale du terrain survolé, la fenêtre W3 représente une « timeline » et la fenêtre W6 une fenêtre textuelle. L'utilisateur a sélectionné un point de passage WP dans la fenêtre graphique W1. La sélection est représentée sur la figure 3 par un double cercle concentrique. Le calculateur a alors basculé ce même point de passage dans les fenêtres W3 et W6 où il est également représenté en mode sélectionné.

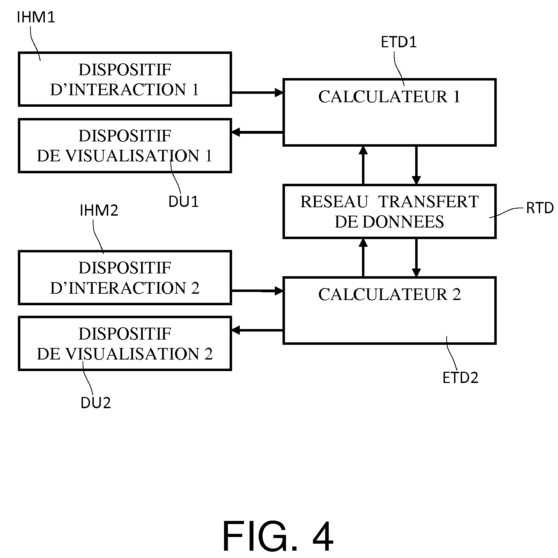

Bien entendu, comme illustré en figure 4, l'invention peut être mise en oeuvre dans un système de visualisation comportant au moins un second équipement d'interaction homme-machine IHM2, un second équipement de traitement de données ETD2 et au moins un second dispositif de visualisation DU2. Dans ce cas, il est intéressant qu'un objet sélectionné dans le premier ensemble d'équipements puise également être sélectionné dans le second ensemble d'équipements. Pour réaliser cette fonction, il est nécessaire que les deux équipements de traitement de données soient reliés par un équipement ou un réseau de transfert de données RTD. Ce réseau peut être classiquement le réseau avionique de bord de type « ARINC 429 » ou Ethernet de type « AFDX », acronyme signifiant « Avionics Full DupleX » ou un bus « CAN », signifiant « Controller Area Network ». Le réseau peut également être de type grand public comme les réseaux Ethernet ou sans fil de type Wi-Fi.

On peut ainsi étendre l'invention à des systèmes de visualisation comportant une pluralité d'équipements d'interaction homme-machine, une pluralité d'équipements de traitement de données et une pluralité de dispositifs de visualisation.

Lorsqu'un objet est sélectionné, il est possible de le faire apparaître dans des dispositifs de visualisation inaccessibles aux équipements d'interaction homme-machine comme le sont, à titre d'exemple, les dispositifs de visualisation Tête Haute.

Il est également possible, lorsqu'un objet est sélectionné, de le créer de toute pièce dans une fenêtre où il n'apparaît pas. Dans ce cas, lorsqu'un objet est sélectionné dans une première fenêtre, celle-ci émet :
- l'événement « event external object selection » accompagné de l'identifiant de l'objet sélectionné à destination des autres fenêtres du système de visualisation ;
- L'événement « distant selection » accompagné de l'identifiant de l'objet et de ses caractéristiques qui sont, par exemple, son nom, sa position, son altitude, l'heure de sélection à destination des équipements IHM distants.

Lorsqu'une fenêtre reçoit un événement « event external object selection » alors elle affiche l'objet dans un état « external highlight ».

Lorsqu'une fenêtre reçoit un événement « distant selection » alors :
- Si l'objet est connu et déjà existant, alors l'objet est affiché dans un état « external highlight » ;
- Si l'objet est inconnu et inexistant, alors l'objet est créé grâce aux caractéristiques de l'objet transféré puis affiché dans cet état « external highlight ».

L'invention s'applique également pour la désélection des objets affichés. Lorsqu'un objet sélectionné est désélectionné dans une fenêtre, le composant associé émet :
- l'événement « event external object deselection » accompagné de l'identifiant de l'objet sélectionné à destination de l'équipement local ;
- L'événement « distant deselection » accompagné de l'identifiant de l'objet et de ses caractéristiques à destination des autres équipements. Lorsqu'une fenêtre reçoit un événement « event external object deselection » alors l'objet affiché dans l'état « external highlight » est affiché dans un état normal.

Lorsqu'un équipement reçoit un événement « distant deselection » alors :
- Si l'objet affiché dans l'état « external highlight » est connu et déjà existant, alors la fenêtre l'affiche dans un état normal ;
- Si l'objet affiché dans l'état « external highlight » a été créé spécifiquement, alors la fenêtre le supprime et ne l'affiche plus.

Ainsi, l'utilisateur a, de façon simple, une vision globale d'un objet sélectionné et de ses caractéristiques dans l'ensemble de son système de visualisation.

## Revendications

1. Système de visualisation de cockpit pour aéronef comportant au moins un premier équipement d'interaction homme-machine(IHM1), un premier équipement de traitement de données (ETD1) et au moins un premier dispositif de visualisation (DU1),
Le premier équipement de traitement de données comprenant une première base de données comportant une pluralité d'objets et des moyens de calcul de différentes premières fenêtres d'affichage (W1, W2, W3, W4, W5, W6) comportant lesdits objets, chaque objet ayant plusieurs formes de présentation, chaque forme de présentation ayant un à plusieurs états de représentation graphique ;
Le premier dispositif de visualisation agencé pour afficher lesdites premières fenêtres d'affichage ;
Le premier équipement d'interaction homme-machine comportant des premiers moyens de sélection d'un état de représentation graphique d'une forme de présentation d'un desdits objets dans une desdites premières fenêtres ;
**Caractérisé en ce que**, les états de représentation graphique d'un objet comportant un état dit « sélectionné », lorsque la sélection d'un état de représentation graphique d'une forme de présentation d'un desdits objets est effective, les moyens de calcul du premier équipement de traitement identifient ledit objet et basculent la totalité des différentes représentations graphiques dudit objet dans les différentes premières fenêtres dans cet état dit « sélectionné ».

2. Système de visualisation de cockpit pour aéronef selon la revendication 1, **caractérisé en ce que** le système de visualisation comporte un second équipement d'interaction homme-machine (IHM2), un second équipement de traitement de données (ETD2), un second dispositif de visualisation (DU2) et un réseau de transfert de données (RTD) relié au premier équipement de traitement de données et au second équipement de traitement de données ;
Le second équipement de traitement de données comprenant une seconde base de données comportant ladite pluralité d'objets et des moyens de calcul de différentes secondes fenêtres d'affichage comportant lesdits objets, chaque objet ayant plusieurs formes de présentation, chaque forme de présentation ayant un à plusieurs états de représentation graphique ;
Le second dispositif de visualisation agencé pour afficher lesdites secondes fenêtres d'affichage ;
Le second équipement d'interaction homme-machine comportant des seconds moyens de sélection d'un état de représentation graphique d'une forme de présentation d'un desdits objets dans une desdites secondes fenêtres, les états de représentation graphique d'un objet comportant un état dit « sélectionné », lorsque la sélection d'un état de représentation graphique d'une forme de présentation d'un desdits objets est effective, les moyens de calcul de l'équipement de traitement identifient ledit objet et basculent la totalité des différentes représentations graphiques dudit objet dans les différentes secondes fenêtres dans cet état dit « sélectionné » et au moyen du réseau de transfert de données, basculent la totalité des différentes représentations graphiques dudit objet dans les différentes premières fenêtres dans cet état dit « sélectionné ».

3. Système de visualisation de cockpit pour aéronef selon l'une des revendications précédentes, **caractérisé en ce que**, lorsqu'un objet est identifié, les moyens de calcul de l'équipement de traitement transmettent aux différentes premières fenêtres des informations d'identification et de paramétrage dudit objet.

4. Système de visualisation de cockpit pour aéronef selon la revendication 3, **caractérisé en ce que**, lorsque l'objet sélectionné est absent d'une desdites fenêtres, les moyens de calcul de l'équipement de traitement créent l'objet dans ladite fenêtre dans un état dit « sélectionné ».

5. Système de visualisation de cockpit pour aéronef selon l'une des revendications précédentes, **caractérisé en ce que** les premières ou les secondes fenêtres d'affichage représentent soit une vue horizontale d'un terrain, soit une vue en coupe verticale dudit terrain, soit une échelle des temps comportant des informations sur une mission de l'aéronef, soit une vue tridimensionnelle dudit terrain, soit une image issue d'un capteur d'imagerie, soit une fenêtre d'informations textuelles.

6. Système de visualisation de cockpit pour aéronef selon l'une des revendications précédentes, **caractérisé en ce que** la pluralité d'objets appartient au domaine de la navigation ou au terrain ou au trafic aérien ou au trafic maritime.

7. Procédé de représentation graphique d'un objet dans un système de visualisation de cockpit pour aéronef comportant au moins un premier équipement d'interaction homme-machine (IHM1), un premier équipement de traitement de données (ETD1) et au moins un premier dispositif de visualisation (DU1),
Le premier équipement de traitement de données comprenant une première base de données comportant une pluralité d'objets et des moyens de calcul de différentes premières fenêtres d'affichage comportant lesdits objets, chaque objet ayant plusieurs formes de présentation, chaque forme de présentation ayant un à plusieurs états de représentation graphique ;
Le premier dispositif de visualisation agencé pour afficher lesdites premières fenêtres d'affichage ;
Le premier équipement d'interaction homme-machine comportant des premiers moyens de sélection d'un état de représentation graphique d'une forme de présentation d'un desdits objets dans une desdites premières fenêtres ;
**Caractérisé en ce que** le procédé de représentation graphique comporte au moins les étapes suivantes :
Sélection d'un état de représentation graphique d'une forme de présentation d'un desdits objets par le premier équipement d'interaction homme-machine dans une desdites premières fenêtres d'affichage ;
Identification dudit objet par les moyens de calcul du premier équipement de traitement ;
Basculement par les moyens de calcul du premier équipement de traitement, de la totalité des différentes représentations graphiques dudit objet dans les différentes premières fenêtres dans un état de représentation graphique dit « sélectionné ».

8. Procédé de représentation graphique d'un objet dans un système de visualisation de cockpit pour aéronef selon la revendication 7, **caractérisé en ce que**, le système de visualisation comportant un second équipement d'interaction homme-machine (IHM2), un second équipement de traitement de données (ETD2), un second dispositif de visualisation (DU2) et un réseau de transfert de données (RTD) relié au premier équipement de traitement de données et au second équipement de traitement de données ;
Le second équipement de traitement de données comprenant une seconde base de données comportant ladite pluralité d'objets et des moyens de calcul de différentes secondes fenêtres d'affichage comportant lesdits objets, chaque objet ayant plusieurs formes de présentation, chaque forme de présentation ayant un à plusieurs états de représentation graphique ;
Le second dispositif de visualisation agencé pour afficher lesdites secondes fenêtres d'affichage ;
Le second équipement d'interaction homme-machine comportant des seconds moyens de sélection d'un état de représentation graphique d'une forme de présentation d'un desdits objets dans une desdites secondes fenêtres,
le procédé de représentation graphique comporte au moins les étapes suivantes :
Sélection d'un état de représentation graphique d'une forme de présentation d'un desdits objets par le second équipement d'interaction homme-machine dans une desdites secondes fenêtres d'affichage ;
Identification dudit objet par les moyens de calcul du second équipement de traitement ;
Basculement par les moyens de calcul du second équipement de traitement, de la totalité des différentes représentations graphiques dudit objet dans les différentes secondes fenêtres dans un état de représentation graphique dit « sélectionné » ;
Transfert au moyen du réseau de transfert de données de l'objet sélectionné du second équipement au premier équipement de traitement de données ;
Basculement par les moyens de calcul du premier équipement de traitement de données, de la totalité des différentes représentations graphiques dudit objet dans les différentes premières fenêtres dans cet état de représentation graphique dit « sélectionné ».
